# EUROPÄISCHE PATENTANMELDUNG

(11) **EP 3 819 734 A1**
(43) Veröffentlichungstag der Anmeldung: **12.05.2021**
(21) Anmeldenummer: 20206894.6
(22) Anmeldetag: 11.11.2020
(51) Int. Cl.: G05B 19/418

(54) **SYSTEM ZUR VERNETZUNG, ÜBERWACHUNG UND/ODER STEUERUNG VON MASCHINEN SOWIE VERFAHREN**

(30) Priorität: 11.11.2019 DE 102019217375
(71) Anmelder: Schäfer Werkzeug- und Sondermaschinenbau GmbH, 76669 Bad Schönborn-Langenbrücken (DE)
(72) Erfinder: Schäfer, Alexander, 76669 Bad Schönborn-Langenbrücken (DE); Schäfer, Markus, 76669 Bad Schönborn-Langenbrücken (DE); Röttger, Michael, 76669 Bad Schönborn-Langenbrücken (DE); Zwahlen, Hans, 76669 Bad Schönborn-Langenbrücken (DE)
(74) Vertreter: Hoffmann Eitle

(57) **Zusammenfassung**

Die Erfindung betrifft ein System zur Vernetzung, Überwachung und/oder Steuerung von Maschinen, wobei die genannten Maschinen zur Verarbeitung von Leitungen und/oder Kabeln verwendet werden. Insbesondere kann es sich bei solchen Maschinen um sogenannte Crimpmaschinen handeln, mit denen ein Kontaktelement (Crimpkontakt) an Litzen eines Kabels aufgebracht wird. Ferner betrifft die Erfindung ein Verfahren.

## Beschreibung

### Technisches Gebiet

Die Erfindung betrifft ein System zur Vernetzung, Überwachung und/oder Steuerung von Maschinen, wobei die genannten Maschinen zur Verarbeitung von Leitungen und/oder Kabeln verwendet werden. Insbesondere kann es sich bei solchen Maschinen um sogenannte Crimpmaschinen handeln, mit denen ein Kontaktelement (Crimpkontakt) an Litzen eines Kabels aufgebracht wird. Ferner betrifft die Erfindung ein Verfahren.

### Stand der Technik

Bei der Verarbeitung von Kabeln und Kontakten werden in einer Fertigung oftmals mehrere Maschinen eingebunden, die unterschiedliche Bearbeitungsarten ausführen können und verschiedenartige Anforderungen parallel erfüllen können, beispielsweise das Aufbringen unterschiedlich dimensionierter Kontaktelemente an entsprechenden Kabelenden. Hierbei ist es bekannt, dass solche Maschinen vor Ort über ein Bedienpaneel gesteuert werden können. Ferner ist es bekannt, Maschinen zur Verarbeitung von Leitungen und/oder Kabeln einem zentralen IT-System zuzuordnen, sodass eine zentrale Überwachung der Produktion durchgeführt werden kann.

Allerdings stellt sich bei der Integration einer oder mehrerer Maschinen in ein zentrales IT-System oftmals die Problematik, dass bei unterschiedlichen Maschinentypen, insbesondere Maschinen unterschiedlicher Hersteller, jeweils einzeln Vorkehrungen getroffen werden müssen, um diese in das IT-System eines bestimmten Anwenders integrieren zu können. Dies führt zu einem entsprechenden Aufwand, sowohl bei der Implementierung als auch bei der Wartung.

### Gegenstand der Erfindung

Die vorliegende Erfindung zielt darauf ab, ein System zur Vernetzung, Überwachung und/oder Steuerung von Maschinen zur Verarbeitung von Leitungen und/oder Kabeln bereitzustellen, das hinsichtlich der Integration von Maschinen eine erhöhte Flexibilität und/oder Modularität aufweist.

Der Gegenstand des Anspruchs 1 stellt ein entsprechendes System bereit. Weitere bevorzugte Ausführungsformen sind in den abhängigen Ansprüchen aufgeführt.

Insbesondere stellt die Erfindung ein System zur Vernetzung, Überwachung und/oder Steuerung von Maschinen zur Verarbeitung von Leitungen, Kabeln und/oder Kontakten bereit. Bei solchen Maschinen kann es sich beispielsweise um Crimpmaschinen, Abmantel- oder Abisoliermaschinen, Maschinen zum Aufbringen von Tüllen, Maschinen zur Qualitätsüberwachung von Steck- oder Crimpkontakten oder ähnliches handeln. Das System umfasst: eine betriebssystem-basierende Servereinheit, wobei die Servereinheit eine bidirektionale, insbesondere datenorientierte und netzwerkbasierte, erste Schnittstelle zur Verbindung mit einer Middleware (oder "Middleware-System" oder "Zwischensystem") zum Anschluss einer oder mehrerer Maschinen zur Verarbeitung von Leitungen, Kabeln und/oder Kontakten aufweist. Die Servereinheit ist eingerichtet, über die erste Schnittstelle Zustands- und/oder Produktionsdaten mit den verbundenen Maschinen auszutauschen, und die Servereinheit ist ferner eingerichtet, die von einer Middleware bereitgestellten Zustands- und/oder Produktionsdaten in Form einer ersten Datenstruktur derart zu verarbeiten, dass die erste Datenstruktur mittels einer Datenverknüpfungsfunktion mit einer zweiten Datenstruktur verknüpfbar ist. Das System weist eine zweite Schnittstelle auf, wobei die zweite Schnittstelle zum bidirektionalen Datenaustausch mit einer externen Einrichtung anhand der zweiten Datenstruktur ausgebildet ist.

Eine externe Einrichtung kann dabei ein Ausgabegerät oder Anzeigegerät, eine Cloud, ein ERP-System und/oder ein MES-System sein. Ein Ausgabegerät kann ein Bildschirm, ein Computer, ein Smartphone oder ein Tablet sein. Eine Cloud ermöglicht als Datenspeicher einen universellen Zugriff auf in der Cloud abgelegte Daten und/oder Informationen. Mittels eines ERP-Systems (Enterprise-Resource-Planning System) kann insbesondere eine Materialbedarfsplanung vorgenommen werden. Ein MES-System (Manufacturing Execution System) oder Produktionsleitsystem dient der Steuerung und/oder Kontrolle der Fertigung.

Die Erfindung hat insbesondere den Vorteil, dass Maschinen zur Verarbeitung von Leitungen, Kabeln und/oder Kontakten, beispielsweise Crimpmaschinen, Abmantel- oder Abisoliermaschinen, Maschinen zum Aufbringen von Tüllen, Maschinen zur Qualitätsüberwachung von Steck- oder Crimpkontakten, usw., über ein gemeinsames System vernetzt werden können. Dabei können auch Maschinen unterschiedlicher Hersteller, die üblicherweise mit einer spezifischen Middleware ausgestattet sind oder mit dieser in Verbindung stehen, mittels einer Servereinheit eingebunden werden. Dies ermöglicht dem Nutzer, eine Überwachung und/oder Steuerung mehrerer Maschinen über ein gemeinsames System vorzunehmen.

Das erfindungsgemäße System hat dahingehend Vorteile, dass ein Nutzer aus dem Bereich der Kabel- und Kontaktverarbeitung Maschinen mit ihren vorhandenen Systemen, insbesondere ERP und/oder MES-Systemen, auf effiziente Weise vernetzen kann. Somit kann mittels des Systems zur transparenten Auftragsabwicklung ein "kommunikationsfähiger" Maschinenpark realisiert werden. Auch bei Einsatz von Maschinen diverser Hersteller kann der Nutzer eine sehr große Maschinen-Sprachvielfalt meistern (aufgrund von unterschiedlichen Steuerungen, Kommunikationsprotokollen, Feldbussystemen usw.).

Somit kann auch ein zeit- und ressourcenaufwendiger Konfigurationsaufwand bei der Erstinbetriebnahme und bei jeder Anpassung an neue Randbedingungen oder Maschinen-Nachrüstungen deutlich reduziert werden.

Vor diesem Hintergrund kann das System dazu dienen, die Kommunikation zwischen Maschinen und Management-Systemen (bspw. ERP/MES) effizient konfigurierbar sowie die Maschinen einfacher überwachbar zu machen und andere Maschinen einzubinden.

Zur vereinfachten und effizienten Auftragsabwicklung kann bedarfsweise mittels des Systems auch ein "Auftragsportal" für den Kunden freigeschaltet werden. Hier sind Informationen, wie aktuell laufende Anfragen, Angebote oder Aufträge sowie eine Zusammenarbeits-Historie für den Nutzer zugänglich.

Ferner werden durch die Vernetzung, Überwachung und/oder Steuerung von Maschinen Maschinen-Stillstandzeiten reduziert und somit unerwünschte Nebenzeiten einer einzelnen Maschine oder eines aus mehreren Maschinen bestehenden Produktionsbereichs (oder Produktionsanlage) verringert.

Ferner wird ein vereinfachter und effizienter (bidirektionaler) Austausch entsprechender Zustands- und/oder Produktionsdaten ermöglicht. Auch wird eine vereinfachte und effiziente Anfrage-, Angebots- sowie Auftragsabwicklung ermöglicht.

In einer weiteren Ausführungsform wird ein System vorgeschlagen, wobei die zweite Schnittstelle als eine OPC UA Schnittstelle eingerichtet ist. OPC UA hat dabei den Vorteil, dass es sich um eine plattformunabhängige Architektur handelt, so dass ein hohes Maß an Flexibilität ermöglicht wird.

In einer weiteren Ausführungsform umfasst das System eine Datenbank, mit der die Servereinheit in Verbindung steht, insbesondere zur Dokumentation, Analyse und/oder Bereitstellung von historischen Zustands- und/oder Produktionsdaten. Beispielsweise kann auf dieser Grundlage eine Qualitätssicherung integriert und/oder eine vorbeugende Wartung implementiert werden. Eine Analyse (z.B. für statistische Auswertungen, Dokumentationszwecke, Produktionsoptimierungen, vorbeugende Wartung) werden auf diesem Wege ermöglicht. Im Bereich der Kabel- und Kontaktverarbeitung sind hierbei insbesondere Crimpkraftüberwachungs-Daten zu nennen.

Die Zustands- und Produktionsdaten können dabei ausgewählt sein aus: Füllstand von Verbrauchsmaterial, insbesondere Crimpkontakten, einem Verarbeitungsqualitätskriterium, Leitungs- oder Kontaktdaten, Produktionszuständen, Fehler- oder Störungsinformationen, Maschinenzuständen, Maschinenkennzahlen wie z.B. Stückzahl pro Zeiteinheit oder Energieverbrauch.

In einer Ausführungsform zeichnet sich das System dadurch aus, dass das System ferner einen Webserver umfasst, der mit der zweiten Schnittstelle in Verbindung steht und eingerichtet ist, eine Bedienoberfläche über ein Ausgabegerät oder Anzeigegerät bereitzustellen. Somit können ein geräteunabhängiger Zugriff und eine entsprechende Bedienung ermöglicht werden.

Es ist bevorzugt, dass die erste und/oder zweite Schnittstelle für eine kabellose Datenübertragung ausgebildet sind, beispielsweise mittels Bluetooth oder einer WLAN-Verbindung. Alternativ kann die erste und/oder zweite Schnittstelle für eine kabelgebundene Datenübertragung, insbesondere mittels eines LAN-Anschlusses, ausgebildet sein. Die erste und zweite Schnittstelle können auch parallel eine Schnittstelle für eine kabellose und eine kabelgebundene Datenübertragung bereitstellen.

In einer Ausführungsform ist es vorgesehen, dass die Datenverknüpfungsfunktion eine Konvertierungsfunktion umfasst. Beispielsweise kann somit ein durch einen Maschinenhersteller verwendetes Format in ein Format konvertiert werden, welches ein Nutzer der Maschine verwendet. Wird zum Beispiel durch einen Maschinenhersteller ein bestimmter Wert in einer metrischen Einheit angegeben, so kann mittels der Konvertierungsfunktion eine Konvertierung in inch erfolgen. Weiterhin kann beispielsweise auch ein Zahlenformat (z.B. Byte oder Integer: 1,0) in ein Textformat umgewandelt (z.B. Boolean: true, false) werden.

Die Schnittstellen können für einen synchronen und einen ereignisbasierten Datenaustausch ausgebildet sein. Ein synchroner Datenaustausch kann dazu genutzt werden, Daten direkt weiterzuverarbeiten. Ein ereignisorientierter Datenaustausch betrifft Daten oder Informationen, die nicht unmittelbar benötigt werden. Wenn beispielsweise ein bestimmtes Produktionsziel erreicht wird, kann dies im Rahmen eines ereignisbasierten Datenaustausches an ein Fertigungsleitsystem übertragen werden.

Es ist bevorzugt, dass die Servereinheit eingerichtet oder konfiguriert ist, die von der Middleware bereitgestellten Daten als Datenbaum zu strukturieren. Somit kann eine Verknüpfung einer ersten Datenstruktur und einer zweiten Datenstruktur visualisiert und vereinfacht werden.

Die Servereinheit kann in einer weiteren Ausgestaltung zum Bereitstellen unterschiedlicher Schnittstellenmasken eingerichtet sein. Beispielsweise wird für ein ERP-System eine erste Maske und für eine MES-System eine zweite Maske bereitgestellt, so dass ein spezifischer Zugriff auf die von der Servereinheit bereitgestellten Daten erfolgen kann.

Gemäß eines weiteren Aspekts wird eine Verwendung des zuvor beschriebenen Systems zur Vernetzung, Überwachung und/oder Steuerung von Maschinen, die zur Verarbeitung von Leitungen, Kabeln und/oder Kontakten geeignet sind, bereitgestellt.

Ferner wird ein Produktionsbereich (oder Fertigungsbereich oder Produktionsanlage) bereitgestellt, der beispielsweise durch eine räumliche oder bauliche Struktur abgegrenzt wird. Der Produktionsbereich kann mehrere Maschinen zur Verarbeitung von Leitungen, Kabeln und/oder Kontakten umfassen. Solche Maschinen können beispielsweise Crimpmaschinen, Abmantel- oder Abisoliermaschinen, Maschinen zum Aufbringen von Tüllen, Maschinen zur Qualitätsüberwachung von Steck- oder Crimpkontakten sein. Ferner umfasst der Produktionsbereich ein System gemäß einem der vorangegangenen Aspekte, wobei Maschinen mittels der ersten Schnittstelle mit der Servereinheit verbunden sind.

Als weiteren Aspekt wird ein Verfahren zur Vernetzung, Überwachung und/oder Steuerung von Maschinen zur Verarbeitung von Leitungen, Kabeln und/oder Kontakten bereitgestellt. Im Rahmen des Verfahrens kann ein System gemäß einem der zuvor genannten Aspekte zum Einsatz kommen.

Das Verfahren umfasst die Schritte: Bereitstellen einer betriebssystem-basierenden Servereinheit, wobei die Servereinheit eine bidirektionale, insbesondere datenorientierte und netzwerkbasierte, erste Schnittstelle zur Verbindung mit einer Middleware zum Anschluss einer oder mehrerer Maschinen zur Verarbeitung von Leitungen, Kabeln und/oder Kontakten aufweist, Austauschen von Zustands- und/oder Produktionsdaten mit den verbundenen Maschinen, Verarbeiten der von der Middleware bereitgestellten Daten in Form einer ersten Datenstruktur derart, dass die erste Datenstruktur mittels einer Datenverknüpfungsfunktion mit einer zweiten Datenstruktur verknüpft wird, und Übertragung der zweiten Datenstruktur von und/oder zu einer externen Einrichtung mittels einer zweiten Schnittstelle. Hinsichtlich der Vorteile wird auf die voranstehenden Ausführungen hinsichtlich des Systems verwiesen.

Eine Übertragung der zweiten Datenstruktur kann dabei synchron und/oder ereignis-basiert erfolgen. Ein ereignisorientierter Datenaustausch betrifft Daten oder Informationen, die nicht unmittelbar benötigt werden. Wenn beispielsweise ein bestimmtes Produktionsziel erreicht wird, kann dies im Rahmen eines ereignisbasierten Datenaustausches an ein Fertigungsleitsystem übertragen werden.

(Historische) Zustands- und/oder Produktionsdaten können in einer Datenbank gespeichert werden, insbesondere zur Dokumentation, Analyse und/oder Bereitstellung zur weiteren Verarbeitung.

Ferner kann das Verfahren den Schritt umfassen: Anzeigen von grafischen Werkzeugen, so dass ein Nutzer eine Verknüpfung zwischen Feldern der ersten Datenstruktur zu Feldern der zweiten Datenstruktur ziehen kann. Beispielsweise kann ein Nutzer eine Verknüpfung mittels Drag-and-Drop zwischen einer jeweils als Datenbaum bereitgestellten ersten Datenstruktur und einer zweiten Datenstruktur durchführen.

Ein Ausgabegerät zum Anzeigen von grafischen Werkzeugen kann ein externes Gerät außerhalb eines Produktionsbereichs oder Teil eines Produktionsbereichs sein.

### Kurze Beschreibung der Zeichnung

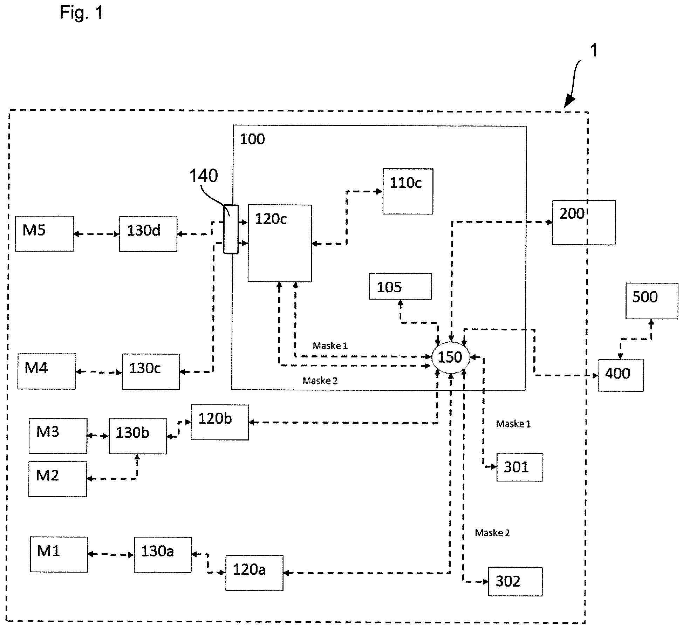

- Fig. 1: zeigt eine schematische Ansicht eines Systems gemäß einer ersten Ausführungsform

### Detaillierte Beschreibung der bevorzugten Ausführungsform

Anhand der beigefügten Figur 1 wird eine bevorzugte Ausführungsform der Erfindung im Detail beschrieben. Weitere in diesem Zusammenhang genannte Modifikationen bestimmter Merkmale können jeweils einzeln miteinander kombiniert werden, um weitere Ausführungsformen der Erfindung auszubilden.

Anhand der schematischen Figur 1 wird ein Produktionsbereich 1 dargestellt, in dem mehrere Maschinen M1-M5 zur Verarbeitung von Leitungen, Kabeln und/oder Kontakten angeordnet sind. Bei solchen Maschinen kann es sich beispielsweise um Crimpmaschinen handeln, die dazu eingesetzt werden, ein Kontaktelement an Litzen eines Kabels aufzubringen. Ferner kann es sich um Abmantel- oder Abisoliermaschinen, Maschinen zum Aufbringen von Tüllen, Maschinen zur Qualitätsüberwachung von Steck- oder Crimpkontakten oder Ähnliches handeln.

Der Produktionsbereich 1 kann dabei durch einen Produktionsstandort eines produzierenden Unternehmens bestimmt sein. Allerdings ist es auch möglich, mehrere örtlich getrennte Bereiche im Produktionsbereich 1 zusammenzufassen, die entsprechend der nachfolgenden Erläuterung miteinander verbunden sind.

Jeder der Maschinen M1-M5 ist ein Middleware-System (auch als "Zwischensystem" bezeichnet) zugeordnet (im vorliegenden Ausführungsbeispiel ein erstes bis viertes Middleware-System 130a-130d), wobei jedes Middleware-System 130a-130d zum Datenaustausch (Zustands- und/oder Produktionsdaten) zwischen einer jeweiligen Maschine und einem System 100 zur Vernetzung, Überwachung und/oder Steuerung der Maschinen verwendet wird.

Die Middleware-Systeme 130a-130d, die als Hardwarekomponente und/oder Software ausgebildet sein können, empfangen die von Sensoren oder Datenerfassungsmitteln einer Maschine zur Verfügung gestellten Daten und reduzieren deren Anzahl und/oder Komplexität, um den Austausch von Zustands- und/oder Produktionsdaten handhabbar zu machen.

Die von einem Middleware-System bereitgestellten Zustands- und/oder Produktionsdaten liegen in einer ersten Datenstruktur vor, die seitens des Maschinenherstellers der jeweiligen Maschine definiert ist.

Ein erstes Middleware-System 130a ist im vorliegenden Ausführungsbeispiel einer ersten Maschine M1 zugeordnet. Ein zweites Middleware-System 130b ist zwei Maschinen M2, M3 zugeordnet. Beispielsweise sind die Maschinen M2, M3 räumlich benachbart angeordnet und stammen von einem bestimmten Maschinenhersteller, so dass auch ein gemeinsames, vom entsprechenden Maschinenhersteller bereitgestelltes zweites Middleware-System von der zweiten und dritten Maschine M2, M3 genutzt werden kann. Ferner ist das dritte und vierte Middleware-System 130c, 130d jeweils einzeln einer bestimmten Maschine M4, M5 zugeordnet.

Jedes Middleware-System 130a-130d verfügt neben einer Verbindung zur jeweiligen Maschine (oder jeweiligen Maschinen) ferner über eine Verbindung, mit der das jeweilige Middleware-System 130a-130d mit einer jeweils zugeordneten Servereinheit verbunden werden kann.

Die erste Servereinheit 120a ist mit dem ersten Middleware-System 130a in einer Hardware-Einheit zusammengefasst und bildet mit dieser eine bauliche Einheit. Die Einheit aus erster Servereinheit 120a und Middleware-System 130a kann in der Maschine M1 integriert sein oder sich räumlich benachbart hierzu befinden.

Die zweite Servereinheit 120b ist separat vom zweiten Middleware-System 130b vorgesehen und steht über eine Schnittstelle mit dem zweiten Middleware-System 130b in Verbindung.

Die dritte Servereinheit 120c ist in das System 100 integriert, das als Hardware-Komponente ausgebildet ist.

Das System 100 weist eine erste Schnittstelle 140 auf, die eingerichtet ist, eine Verbindung zwischen dem dritten und vierten Middleware-System 130c, 130d und der dritten Servereinheit 120c herzustellen.

Die dritte Servereinheit 120c ist konfiguriert, die von der dritten und vierten Middleware 130c, 130d bereitgestellten Zustands- und/oder Produktionsdaten in Form einer ersten Datenstruktur derart zu verarbeiten, dass die erste Datenstruktur mittels einer Datenverknüpfungsfunktion mit einer zweiten Datenstruktur verknüpfbar ist.

Als Datenverknüpfungsfunktion ist hierbei eine Datenmapping-Funktion oder -Einrichtung in der dritten Servereinheit 120c integriert, die es einem Bediener ermöglicht, die in einer ersten Datenstruktur vom dritten oder vierten Middleware-System 130c, 130d bereitgestellten Zustands- und/oder Produktionsdaten in eine zweite Datenstruktur zu konvertieren, die im Ausführungsbeispiel über eine zweite Schnittstelle 150 austauschbar ist.

Dabei kann die Datenverknüpfungsfunktion eine Konvertierungsfunktion umfassen, die es ermöglicht, Daten der ersten Datenstruktur in Daten der zweiten Datenstruktur zu konvertieren. Beispielsweise können metrische Werte in inch-Werte konvertiert werden. Weiterhin kann beispielsweise auch ein Zahlenformat (z.B. Byte oder Integer: 1,0) in ein Textformat umgewandelt (z.B. Boolean: true, false) werden. Auf die in der zweiten Datenstruktur vorliegenden Werte, die als "Nutzer-Datenbaum" angeordnet sein können, kann zur weiteren Verarbeitung/ Verwendung/ Analyse zugegriffen werden.

Die zweite Datenstruktur ist eine OPC UA-basierte Datenstruktur und somit unabhängig von einer Datenstruktur eines bestimmten Maschinenherstellers. OPC UA ist für einen Datenaustausch auf Grundlage einer plattformunabhängigen Architektur ausgelegt. Somit ist die dritte Servereinheit 120c durch die Datenverknüpfungsfunktion eingerichtet, die Zustands- und/oder Produktionsdaten auf Grundlage der herstellerseitigen ersten Datenstruktur in die zweite Datenstruktur umzuwandeln, die mittels einer plattformunabhängigen Architektur übertragen und nutzerseitig verwendet werden können.

Das System 100 umfasst zusätzlich eine Datenbank 110c, die mit der dritten Servereinheit 120c verbunden ist, wobei die Datenbank 110c eingerichtet ist, Zustands- und/oder Produktionsdaten zu sammeln und zu speichern, um somit eine Dokumentation historischer Zustands- und/oder Produktionsdaten anzulegen. Die gespeicherten Zustands- und/oder Produktionsdaten können manuell oder maschinell ausgewertet und/oder analysiert werden, beispielweise um Produktionsabläufe zu überwachen oder die Produktivität zu bewerten.

Obwohl die Datenbank 110c im Ausführungsbeispiel im System 100 integriert ist, kann es sich gemäß einer Modifikation auch um eine Datenbank handeln, die über eine Schnittstelle mit dem System 100, insbesondere der dritten Servereinheit 120c, in Verbindung steht.

Die erste Servereinheit 120a und die zweite Servereinheit 120b sind mittels der zweiten Schnittstelle 150 mit dem System 100 verbunden. Obwohl die erste und zweite Servereinheit 120a, 120b räumlich vom System 100 getrennt sind, können die von der ersten und zweiten Servereinheit 120a, 120b bereitgestellten Zustands- und/oder Produktionsdaten der Maschinen M1-M3 eingebunden werden.

Ferner umfasst das System 100 einen mit der zweiten Schnittstelle 150 in Verbindung stehenden Webserver 105, der eingerichtet ist, die von der dritten Servereinheit 120c in der zweiten Datenstruktur bereitgestellten Daten für externe Geräte oder Systeme bereitzustellen, insbesondere einem Ausgabegerät 200. Entsprechendes gilt für die in der zweiten Datenstruktur vorliegenden Zustands- und/oder Produktionsdaten, die von der ersten und zweiten Servereinheit 120a, 120b bereitgestellt werden.

Das Ausgabegerät 200 kann ein externes Gerät außerhalb des Produktionsbereichs 1 oder Teil des Produktionsbereichs 1 sein.

Mittels des Ausgabegeräts 200, das ein Bildschirm, ein Tablet, ein Smartphone oder dergleichen sein kann und insbesondere mittels der zweiten Schnittstelle 150 auf den Webserver 105 zugreift, kann ein Nutzer die vom Webserver 105 zur Verfügung gestellten Daten in einer visualisierten Oberfläche betrachten und bearbeiten. Somit kann ein Nutzer über den Webserver 105 auf die Servereinheit 120c zugreifen, um sich aktuelle Zustands- und/oder Produktionsdaten anzeigen zu lassen oder eine neue Maschine über die erste Schnittstelle 140 mit der dritten Servereinheit zu verknüpfen.

Im Ausführungsbeispiel hat der Nutzer somit die Möglichkeit, auf Zustands- und/oder Produktionsdaten der Maschinen M1-M5 zuzugreifen, wobei eine Verbindung zur vierten und fünften Maschine bzw. deren zugeordneter Middleware 130c, 130d über die dritte Servereinheit 120c des Systems 100 besteht, wohingegen die erste, zweite und dritte Maschinen über eigene Servereinheiten 120a, 120b mit der zweiten Schnittstelle 150 des Systems 100 verbunden sind.

Auch können mittels des Webservers 105 grafische Werkzeuge angezeigt werden, die es dem Nutzer ermöglichen, eine Verknüpfung zwischen Feldern einer Datenstruktur zu Feldern der anderen Datenstruktur zu ziehen (Datenmapping). Ein Nutzer kann aus einem graphisch angezeigten Datenbaum, der die erste Datenstruktur enthält, beispielsweise mittels Drag-and-Drop eine Verknüpfung mit der zweiten Datenstruktur herstellen.

Für einen Zugriff auf den Webserver 105 kann ein Nutzer insbesondere einen (frei verfügbaren) Internet-Browser oder eine Web-App nutzen, der oder die je nach Berechtigungen des Nutzers Funktionen und Zugriffsmöglichkeiten zur Verfügung stellt. Ein Internet-Browser oder eine Web-App bietet dem Nutzer eine komfortable Bedienmöglichkeit. Insbesondere können Zustands- und/oder Produktionsdaten, die in der zweiten Datenstruktur zur Verfügung gestellt werden, synchron, beispielsweise in "Echtzeit", oder ereignisorientiert überwacht werden.

Auch kann mit dem Ausgabegerät durch Zugriff auf historische Zustands- und/oder Produktionsdaten eine Historie der in der Datenbank 110c hinterlegten Zustands- und/oder Produktionsdaten bewertet werden. Weiterhin können die Daten beispielsweise verwendet werden, um prädiktive Datenanalysen durchzuführen, insbesondere die vorausschauende Wartung der Maschinen, beispielsweise mittels eines digitalen Zwillings.

Mittels der zweiten Schnittstelle 150 kann ein externer Datenspeicher (Cloud/IoT-Server) 400 verbunden sein, der im Ausführungsbespiel eine Kommunikation mit einem Maschinenhersteller-System 500 ermöglicht.

Ferner kann ein Ressourcenplanungssystem 301 (Enterprise-Resource-Planning) mittels der zweiten Schnittstelle 150 mit dem System 100 verbunden sein, um einerseits die von der dritten Servereinheit 120c bereitgestellten Zustands- und/oder Produktionsdaten zu empfangen und andererseits Informationen zur Ressourcenplanung/Materialplanung bereitzustellen, um Ressourcen, wie Betriebsmittel oder Material bedarfsgerecht zu steuern.

Über die zweite Schnittstelle 150 kann darüber hinaus ein Produktionsleitsystem 302 mit dem System 100 verbunden werden.

Mittels der dritten Servereinheit 120c werden unterschiedliche Masken (OPC UA Masken) bereitgestellt, so dass das Ressourcenplanungssystem 301 und das Produktionsleitsystem 302 jeweils mit unterschiedlichen Möglichkeiten verbunden auf die dritte Servereinheit 120c zugreifen können.

## Patentansprüche

1. System (100) zur Vernetzung, Überwachung und/oder Steuerung von Maschinen zur Verarbeitung von Leitungen, Kabeln und/oder Kontakten, umfassend:
Eine betriebssystem-basierende Servereinheit (120c), wobei die Servereinheit (120c) eine bidirektionale erste Schnittstelle (140) zur Verbindung mit einer Middleware (130c-130d) zum Anschluss einer oder mehrerer Maschinen (M4-M5) zur Verarbeitung von Leitungen, Kabeln und/oder Kontakten aufweist,
wobei die Servereinheit (120c) eingerichtet ist, über die erste Schnittstelle (140) Zustands- und/oder Produktionsdaten mit den verbundenen Maschinen (M4-M5) auszutauschen,
wobei die Servereinheit (120c) weiterhin eingerichtet ist, die von der Middleware (130c, 130d) bereitgestellten Zustands- und Produktionsdaten in Form einer ersten Datenstruktur derart zu verarbeiten, dass die erste Datenstruktur mittels einer Datenverknüpfungsfunktion mit einer zweiten Datenstruktur verknüpfbar ist,
wobei das System (100) eine zweite Schnittstelle (150) aufweist, welche zum bidirektionalen Datenaustausch mit einer externen Einrichtung anhand der zweiten Datenstruktur ausgebildet ist.

2. System gemäß Anspruch 1, wobei die zweite Schnittstelle (150) als eine OPC UA Schnittstelle eingerichtet ist.

3. System (100) gemäß einem der vorangegangenen Ansprüche, ferner umfassend eine Datenbank (110c), mit der die Servereinheit (120c) in Verbindung steht, insbesondere zur Dokumentation, Analyse und/oder Bereitstellung von Zustands- und/oder Produktionsdaten.

4. System (100) gemäß einem der vorangegangenen Ansprüche, wobei die Zustands- und/oder Produktionsdaten ausgewählt sind aus: Füllstand von Verbrauchsmaterial, insbesondere Crimpkontakten, einem Verarbeitungsqualitätskriterium, Leitungs- oder Kontaktdaten, Produktionszuständen, Fehler- oder Störungsinformationen, Maschinenzuständen, Maschinenkennzahlen wie z.B. Stückzahl pro Zeiteinheit oder Energieverbrauch.

5. System (100) gemäß einem der vorangegangenen Ansprüche, ferner umfassend einen Webserver (105), der mit der zweiten Schnittstelle (150) in Verbindung steht und eingerichtet ist, eine Bedienoberfläche über ein Ausgabegerät (200) zu ermöglichen.

6. System (100) gemäß einem der vorangegangenen Ansprüche, wobei die erste und/oder zweite Schnittstelle (140; 150) für eine kabellose Datenübertragung ausgebildet sind, oder
die erste und/oder zweite Schnittstelle für eine kabelgebundene Datenübertragung, insbesondere mittels eines LAN-Anschlusses, ausgebildet sind.

7. System (100) gemäß einem der vorangegangenen Ansprüche, wobei die Datenverknüpfungsfunktion eine Konvertierungsfunktion umfasst.

8. System (100) gemäß einem der vorangegangenen Ansprüche, wobei die Schnittstellen (140, 150) für einen synchronen und einen ereignisbasierten Datenaustausch ausgebildet sind.

9. System (100) gemäß einem der vorangegangenen Ansprüche, wobei die Servereinheit (120c) eingerichtet ist, die von der Middleware bereitgestellten Daten als Datenbaum zu strukturieren.

10. System (100) gemäß einem der vorangegangenen Ansprüche, **dadurch gekennzeichnet, dass** die Servereinheit (120c) zum Bereitstellen unterschiedlicher Schnittstellenmasken eingerichtet ist.

11. Produktionsbereich (1), umfassend mehrere Maschinen (M1-M5) zur Verarbeitung von Leitungen, Kabeln und/oder Kontakten, insbesondere Crimpmaschinen, Abmantel- oder Abisoliermaschinen, Maschinen zum Aufbringen von Tüllen, Maschinen zur Qualitätsüberwachung von Steck- oder Crimpkontakten, und
ein System (100) gemäß einem der vorangegangenen Ansprüche, wobei die Maschinen mittels der ersten Schnittstelle (140) mit der Servereinheit (120c) verbunden sind.

12. Verfahren zur Vernetzung, Überwachung und/oder Steuerung von Maschinen zur Verarbeitung von Leitungen, Kabeln und/oder Kontakten, mit den Schritten:
Bereitstellen einer betriebssystem-basierenden Servereinheit (120c), wobei die Servereinheit (120c) eine bidirektionale erste Schnittstelle (140) zur Verbindung mit einer Middleware (130c, 130d) zum Anschluss einer oder mehrerer Maschinen (M4-M5) zur Verarbeitung von Leitungen, Kabeln und/oder Kontakten aufweist,
Austauschen von Zustands- und/oder Produktionsdaten mit den verbundenen Maschinen (M4-M5),
Verarbeiten der von der Middleware (130c, 130d) bereitgestellten Daten in Form einer ersten Datenstruktur derart, dass die erste Datenstruktur mittels einer Datenverknüpfungsfunktion mit einer zweiten Datenstruktur verknüpft wird,
Übertragung der zweiten Datenstruktur von und/oder zu einer externen Einrichtung mittels einer zweiten Schnittstelle (150).

13. Verfahren gemäß Anspruch 12, bei dem eine Übertragung der zweiten Datenstruktur synchron und/oder ereignis-basiert erfolgt.

14. Verfahren gemäß Anspruch 12 oder 13, wobei Zustands- und/oder Produktionsdaten in einer Datenbank (110c) gespeichert werden, insbesondere zur Dokumentation, Analyse und/oder Bereitstellung zur weiteren Verarbeitung.

15. Verfahren gemäß einem der Ansprüche 12-14, umfassend den Schritt:
Anzeigen von grafischen Werkzeugen, so dass ein Nutzer eine Verknüpfung zwischen Feldern der ersten Datenstruktur zu Feldern der zweiten Datenstruktur ziehen kann.
